# EUROPÄISCHE PATENTANMELDUNG

(11) **EP 4 610 220 A1**
(43) Veröffentlichungstag der Anmeldung: **03.09.2025**
(21) Anmeldenummer: 23020505.6
(22) Anmeldetag: 27.02.2024
(51) Int. Cl.: C01B 3/02, C01B 3/48, C01B 3/50, F25J 3/02

(54) **VERFAHREN UND VORRICHTUNG ZUR KOHLENDIOXIDARMEN ERZEUGUNG EINES AMMONIAKSYNTHESEGASES**

(71) Anmelder: Linde GmbH, 82049 Pullach (DE)
(72) Erfinder: Seliger, Andreas, 82049 Pullach (DE); Haselsteiner, Thomas, 82049 Pullach (DE); Schwarzhuber, Josef, 82049 Pullach (DE); Müller-Thorwart, Ole, 82049 Pullach (DE)
(74) Vertreter: Fischer, Werner

(57) **Zusammenfassung**

Die Erfindung betrifft ein Verfahren sowie eine Vorrichtung zur Erzeugung eines kohlenmonoxidfreien, weitgehend aus Wasserstoff und Stickstoff bestehenden Make-up-Gases (15) für eine Ammoniaksynthese, wobei ein kohlenwasserstoffhaltiger Einsatz (1) durch Reformierung (B) und Wassergas-Shift (G) zu einem weitgehend aus Wasserstoff und Kohlendioxid bestehenden, Kohlenmonoxid enthaltenden Synthesegas (6) umgesetzt wird, aus dem durch Abtrennung von Kohlendioxid (7) Rohwasserstoff (8) entsteht, von dem zumindest ein Teil zu einem Einsatz (Kryo-Einsatz) (10) für eine kryogene Gaszerlegung (K) aufbereitet wird, bei der aus dem Kryo-Einsatz (10) eine wasserstoffreiche, kohlenmonoxidfreie erste Gasfraktion (11), die als Make-up-Gas weitergeführt oder mit Stickstoff (14) zum Make-up-Gas (15) ergänzt wird, sowie eine wasserstoffreiche und kohlenstoffarme, als Brenngas (13) zur Erzeugung von Prozesswärme verwendete zweite Gasfraktion entstehen. Kennzeichnend hierbei ist, dass die wasserstoffreiche und kohlenstoffarme zweite Gasfraktion (13) bei der kryogenen Gaszerlegung (K) mit einem Kohlenstoffgehalt gewonnen wird, der geringer als derjenige des Kryo-Einsatzes (10) und höher als derjenige der wasserstoffreichen, kohlenmonoxidfreien ersten Gasfraktion (11) ist.

## Beschreibung

Die Erfindung betrifft ein Verfahren zur Erzeugung eines kohlenmonoxidfreien, weitgehend aus Wasserstoff und Stickstoff bestehenden Make-up-Gases für eine Ammoniaksynthese, wobei ein kohlenwasserstoffhaltiger Einsatz durch Reformierung und Wassergas-Shift zu einem weitgehend aus Wasserstoff und Kohlendioxid bestehenden, Kohlenmonoxid enthaltenden Synthesegas umgesetzt wird, aus dem durch Abtrennung von Kohlendioxid Rohwasserstoff entsteht, von dem zumindest ein Teil zu einem Einsatz (Kryo-Einsatz) für eine kryogene Gaszerlegung aufbereitet wird, bei der aus dem Kryo-Einsatz eine wasserstoffreiche, kohlenmonoxidfreie erste Gasfraktion, die als Make-up-Gas weitergeführt oder mit Stickstoff zum Make-up-Gas ergänzt wird, sowie eine wasserstoffreiche und kohlenstoffarme, als Brenngas zur Erzeugung von Prozesswärme verwendete zweite Gasfraktion entstehen.

Gegenstand der Erfindung ist auch eine für die Durchführung des erfindungsgemäßen Verfahrens geeignete Vorrichtung.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert. Zwar werden Wasserstoff und Stickstoff heute noch überwiegend unter Bildung und Freisetzung großer Mengen klimaschädlichen Kohlendioxids erzeugt, doch gibt es verstärkt Anstrengungen, das anfallende Kohlendioxid nicht in die Atmosphäre zu entlassen, sondern durch Sequestrierung oder stoffliche Nutzung zu entsorgen.

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 100 und 200 bar einer Ammoniaksynthese zugeführt, um mit katalytischer Unterstützung in einem Ammoniakreaktor exotherm zu Ammoniak umgesetzt zu werden. Aufgrund thermodynamischer Limitierungen erfolgt die Umsetzung allerdings nur unvollständig, so dass ein Gasgemisch entsteht, das neben Ammoniak auch erhebliche Wasserstoff- und Stickstoffanteile enthält. Mit einer Temperatur zwischen 400 und 450°C verlässt dieses Gasgemisch den Ammoniakreaktor und wird nachfolgend in einer Reihe von Wärmetauschern abgekühlt, um Ammoniak durch Kondensation abzuscheiden und ein weitgehend aus Wasserstoff und Stickstoff bestehendes, Reste nicht abgeschiedenen Ammoniaks enthaltendes Recyclegas zu erhalten, das zur Erhöhung der Ammoniakausbeute in einem Synthesekreislauf zum Ammoniakreaktor zurückgeführt und dabei mit einem Make-up-Gas zum Ammoniaksynthesegas gemischt wird.

Nach dem Stand der Technik wird zur Erzeugung eines Make-up-Gases für die Ammoniaksynthese ein kohlenwasserstoffhaltiger Einsatz, bei dem es sich etwa um Erdgas handelt, ggf. entschwefelt und anschließend beispielsweise durch Partielle Oxidation, Autothermal- oder Dampfreformierung zu einem Syntheserohgas reformiert, das großenteils aus Wasserstoff, Kohlenmonoxid sowie Kohlendioxid besteht und das insbesondere dann, wenn die Reformierung unter Einsatz von Luftsauerstoff erfolgt, auch signifikante Argonmengen enthält. Anschließend wird das Syntheserohgas einer Wassergas-Shift unterzogen, um das enthaltene Kohlenmonoxid mit Wasser zu Wasserstoff und Kohlendioxid umzusetzen und ein Synthesegas zu gewinnen. Gewöhnlich durch Sauergaswäsche wird Kohlendioxid aus dem Synthesegas abgetrennt, wobei eine Kohlendioxidfraktion mit einer für ihre Sequestrierung oder stofflichen Nutzung ausreichenden Reinheit sowie eine als Rohwasserstoff bezeichnete Wasserstofffraktion, die neben Wasserstoff auch Reste von Kohlenmonoxid, Kohlendioxid und Methan sowie evtl. Argon umfasst, erhalten werden.

Damit Kohlenmonoxid nicht über das Make-up-Gas in den Ammoniakreaktor gelangen und das dort eingesetzte Katalysatormaterial vergiften kann, wird der Rohwasserstoff nach dem Stand der Technik durch Methanisierung, Druckwechseladsorption oder ein kryogenes Verfahren behandelt, wobei Kohlenmonoxid umgewandelt oder abgetrennt wird und eine Wasserstofffraktion entsteht, die aufgrund ihres geringen, typischerweise unterhalb von 10 ppmv liegenden Kohlenmonoxidgehalts als kohlenmonoxidfrei angesprochen wird, und von der zumindest ein Teil als Make-up-Gas weitergeführt oder mit Stickstoff zum Make-up-Gas ergänzt wird.

Sauergaswäschen, wie sie zur Abtrennung von Kohledioxid aus dem Synthesegas eingesetzt werden, nutzen die Eigenschaft von Flüssigkeiten aus, Kohlendioxid und andere Sauergase aus einem Gasgemisch selektiv zu absorbieren und in Lösung zu halten. Je höher der Druck ist, bei dem die Wäsche durchgeführt wird, desto besser werden die Sauergase absorbiert und aus dem zu reinigenden Gasgemisch abgetrennt. Da das Synthesegas in der Wassergas-Shift auf einem Druckniveau anfällt, das typischerweise zwischen 25 und 45bar(a) liegt, sind die zu behandelnden Volumenströme klein, so dass Kohlendioxid mit vergleichsweise geringen Investitions- und Betriebskosten durch eine Sauergaswäsche aus dem Synthesegas abgetrennt werden kann.

Kohlendioxid ist auch in Rauchgasen enthalten, die bei der Synthesegaserzeugung in Reformern und in zur Anwärmung von Einsatzstoffen eingesetzten Öfen entstehen, zu deren Beheizung gewöhnlich Erdgas und/oder kohlenstoffhaltige Restgase verbrannt werden. Anders als das Synthesegas, sind diese Rauchgase drucklos. Da sie deshalb nur sehr kostenintensiv und aufwendig durch eine Sauergaswäsche oder andere Verfahren zur Kohledioxidabtrennung behandelt werden können, werden sie üblicherweise zusammen mit dem bei der Verbrennung gebildeten Kohlendioxid in die Atmosphäre freigesetzt.

Mit den beschriebenen Methoden lassen sich daher nicht mehr als 90% des zur Erzeugung des Make-up-Gases eingesetzten Kohlenstoffs in Form von Kohlendioxid abtrennen und durch Sequestrierung entsorgen oder stofflich nutzen. Je nach den gesetzlichen Vorgaben und Pönalen auf die Kohlendioxidemissionen, kann es vorteilhaft sein, höhere Kohlenstoff-Abtrennquoten zu realisieren.

Eine Möglichkeit zur Erhöhung der Kohlenstoff-Abtrennquote ist der Patentanmeldung EP22020408 zu entnehmen, deren Inhalt mit ihrer Zitierung in die vorliegende Beschreibung aufgenommen wird. Die EP22020408 schlägt vor, den Rohwasserstoff mit Hilfe einer kryogenen Gaszerlegung zu einer wasserstoffreichen, kohlenmonoxidfreien Gasfraktion aufzubereiten von der ein erster Teil als Make-up-Gas weitergeführt oder mit Stickstoff zum Make-up-Gas ergänzt und ein zweiter Teil als Brenngas genutzt wird, bei dessen Verbrennung kein Kohlendioxid entsteht. Nachteilig hierbei ist allerdings, dass ein Teil der aufwendig erzeugten wasserstoffreichen, kohlenmonoxidfreien Gasfraktion nicht zu Ammoniak umgesetzt werden kann.

Aufgabe der Erfindung ist es, ein Verfahren der gattungsgemäßen Art sowie eine Vorrichtung zu dessen Durchführung anzugeben, die es ermöglichen, ein Make-up-Gas für die Ammoniaksynthese mit reduzierter Kohlendioxidfreisetzung, jedoch ohne die beschriebenen Nachteile des Standes der Technik zu erzeugen.

Die gestellte Aufgabe wird verfahrensseitig erfindungsgemäß dadurch gelöst, dass die wasserstoffreiche und kohlenstoffarme zweite Gasfraktion bei der kryogenen Gaszerlegung mit einem Kohlenstoffgehalt gewonnen wird, der geringer als derjenige des Kryo-Einsatzes und höher als derjenige der wasserstoffreichen, kohlenmonoxidfreien ersten Gasfraktion ist.

Vorzugsweise umfasst die kryogene Gaszerlegung eine Stickstoffwäsche, in der zumindest ein Teil des gegen anzuwärmende Verfahrensströme abgekühlten Kryo-Einsatzes mit Hilfe von importiertem Hochdruckstickstoff, der beispielsweise gasförmig von einem Luftzerleger bezogen und ebenfalls gegen anzuwärmende Verfahrensströme abgekühlt und verflüssigt wird, in einer Kolonne gewaschen wird, um insbesondere Kohlenmonoxid, aber auch andere im Make-up-Gas unerwünschte Stoffe wie Kohlendioxid, Methan und Argon abzutrennen. Der Kryo-Einsatz oder ein abgetrennter Teil des Kryo-Einsatzes wird dabei gasförmig in den unteren Bereich der Waschkolonne eingeleitet, wo er auf seinem Weg nach oben über Stoffaustauchelemente intensiv mit dem am Kopf der Waschkolonne flüssig zugeführten Stickstoff in Kontakt gebracht wird. Der Stickstoff reichert sich auf seinem Weg nach unten mit unerwünschten Stoffen an, während der Gehalt an unerwünschten Stoffen in der im Gegenstrom geführten Gasphase kontinuierlich abnimmt, so dass die vom Kopf der Waschkolonne gereinigt abgezogene Gasfraktion hauptsächlich aus Wasserstoff und Stickstoff besteht und das für den Katalysator der Ammoniaksynthese schädliche Kohlenmonoxid nur noch in einer unkritischen Menge enthält. Dieses daher als kohlenmonoxidfrei anzusprechende Kopfgas wird gegen abzukühlende Verfahrensströme angewärmt und ggf. lediglich mit Stickstoff angereichert, um die für das Make-up-Gas geforderte Zusammensetzung einzustellen.

In einer bevorzugten Variante des erfindungsgemäßen Verfahrens ist vorgesehen, dass neben dem wasserstoffreichen, kohlenmonoxidfreien Kopfgas eine wasserstoffreiche und kohlenstoffarme Gasfraktion mit einem Kohlenstoffgehalt, der geringer als derjenige des Kryo-Einsatzes und höher als derjenige des Kopfgases ist, über einen Seitenabzug aus der Waschkolonne abgezogen und nach Anwärmung gegen abzukühlende Verfahrensströme als Brenngas eingesetzt wird.

Anders als in der EP22020408, wird nur ein Teil des der Waschkolonne zugeführten Kryo-Einsatzes einer vollständigen Wäsche mit flüssigem Stickstoff unterzogen, während die als Brenngas bereitgestellte Gasfraktion durch eine lediglich unvollständige Wäsche erhalten wird. Die Stickstoffwäsche kann daher im Vergleich zum Stand der Technik mit einer geringeren Waschmittelmenge durchgeführt werden. Insbesondere dann, wenn die wasserstoffreiche und kohlenstoffarme Gasfraktion unterhalb des obersten Stoffaustauschelements der Waschkolonne abgezogen wird, führt die eingesparte Stickstoffmenge zu einer deutlichen Verbesserung der Wirtschaftlichkeit. Die Wahl der Position des Seitenabzugs ermöglicht es, den Kohlenstoffgehalt des Brenngases so einzustellen, dass eine vorgegebene Kohlenstoff-Abtrennquote bei geringsten Investitions- und Betriebskosten erreicht wird.

Bei der Stickstoffwäsche wird neben den im Make-up-Gas unerwünschten Stoffen unvermeidlich auch ein Teil des im Kryo-Einsatz enthaltenen Wasserstoffs coabsorbiert. Zur Rückgewinnung dieses Wasserstoffs kann zumindest ein Teil des mit den aus dem Kryo-Einsatz abgetrennten Komponenten beladenen Stickstoffs aus dem Sumpf der Waschkolonne abgezogen und in einen als Kolonnensumpfabscheider bezeichneten Abscheider entspannt werden, wo er in eine wasserstoffreiche und kohlenstoffarme Gas- sowie eine Flüssigfraktion getrennt wird, die den überwiegenden Teil des aus dem Kryo-Einsatz abgetrennten Kohlenstoffs enthält. Eine Ausgestaltung des erfindungsgemäßen Verfahrens sieht vor, zumindest einen Teil der im Kolonnensumpfabscheider erhaltenen wasserstoffreichen und kohlenstoffarmen Gasfraktion als Brenngas einzusetzen.

Insbesondere dann, wenn der Kryo-Einsatz Methan enthält, ist erfindungsgemäß vorgesehen, den Kryo-Einsatz bei der kryogenen Gaszerlegung so weit abzukühlen, dass der größte Teil des enthaltenen Methans auskondensiert. Das dabei entstehende zweiphasige Stoffgemisch wird in einem stromaufwärts der Stickstoffwäsche angeordneten und als Kolonneneinsatzabscheider bezeichneten Abscheider getrennt, wobei eine methanreiche Flüssig- sowie eine wasserstoffreiche und kohlenstoffarme Gasfraktion, die einen Teil des im Kryo-Einsatz vorhandenen Kohlenmonoxids sowie ggf. Argon enthält, entstehen. Ein erster Teil der wasserstoffreichen, im Kohlestoffgehalt gegenüber dem Kryo-Einsatz abgereicherten Gasfraktion wird aus dem Kolonneneinsatzabscheider abgeführt und der Wäsche mit flüssigem Stickstoff unterzogen, während ein zweiter Teil der wasserstoffreichen und kohlenstoffarmen Gasfraktion nach Anwärmung gegen abzukühlende Verfahrensströme als Brenngas eingesetzt wird.

Jedes der erfindungsgemäß erzeugten Brenngase kann entweder allein oder zusammen mit einer oder mehreren anderen in der kryogenen Gaszerlegung erhaltenen wasserstoffreichen und kohlenstoffarmen Gasfraktionen zur Erzeugung von Prozesswärme verbrannt werden.

Um Blockaden durch gefrierendes Wasser in der kryogenen Gaszerlegung zu vermeiden, umfasst die Aufbereitung des Rohwasserstoffs zum Kryo-Einsatz einen Trocknungsschritt, bei dem Wasser aus dem ggf. vorbehandelten Rohwasserstoff bevorzugt adsorptiv entfernt wird. Die Regenerierung der im Trocknungsschritt mit Wasser beladenen Adsorber wird mit Hilfe eines wasserfreien Regeneriergases durchgeführt. Erfindungsgemäß wird als Regeneriergas ein wasserfreies Gas aus der kryogenen Gaszerlegung eingesetzt, das durch Verdampfung und Anwärmung gegen abzukühlende Verfahrensströme aus zumindest einem Teil des bei der Stickstoffwäsche gebildeten Sumpfprodukts und/oder zumindest einem Teil der im Kolonnensumpfabscheider und/oder oder im Kolonneneinsatzabscheider anfallenden Flüssigphasen erhalten wird. Da jedes dieser Gase Kohlenstoff enthält, können zumindest Teile von ihnen zur Verbesserung der Kohlenstoff-Abtrennquote des Verfahrens nach ihrer Verwendung als Regeneriergas oder direkt zurückgeführt und in der Reformierung eingesetzt werden.

Bei seiner Aufbereitung zum Kryo-Einsatz kann der Rohwasserstoff stromaufwärts des Trocknungsschritts einer Methanisierung unterzogen werden, wobei im Rohwasserstoff enthaltenes Kohlenmonoxid und Kohlendioxid mit Wasserstoff zu Wasser und Methan umgewandelt werden.

Vorzugsweise wird das erfindungsgemäß erzeugte Brenngas zur Vorwärmung eines Einsatzstoffs für die Reformierung und/oder zur Bereitstellung von Wärme für die Reformierungsreaktion und/oder zur Produktion oder Überhitzung von Prozessdampf eingesetzt.

Mit besonderem Vorteil kann das erfindungsgemäße Verfahren bei der Gewinnung von "blauem" Ammoniak eingesetzt werden, wobei versucht wird, das bei der Erzeugung des Make-up-Gases anfallende Kohlendioxid möglichst vollständig durch Sequestrierung oder stoffliche Nutzung zu entsorgen.

Weiterhin betrifft die Erfindung eine Vorrichtung zur Erzeugung eines kohlenmonoxidfreien, weitgehend aus Wasserstoff und Stickstoff besehenden Make-up-Gases für eine Ammoniaksynthese, mit einer Reformiereinrichtung, in der ein kohlenwasserstoffhaltiger Einsatz umgesetzt werden kann, um ein Wasserstoff, Kohlenmonoxid und Kohlendioxid enthaltendes Syntheserohgas zu erhalten, einer Wassergas-Shift und einer Kohlendioxidabtrennung, mit deren Hilfe aus dem Syntheserohgas eine wasserstoffreiche, Kohlenmonoxidreste umfassende, als Rohwasserstoff bezeichnete Fraktion erzeugt werden kann, einer Aufbereitungseinrichtung, mit der zumindest ein Teil des Rohwasserstoffs zu einem wasserstoffreichen, Kohlenstoffverbindungen aufweisenden Einsatzgas (Kryo-Einsatz) für einen kryogenen Gaszerleger aufbereitet werden kann, sowie einem kryogenen Gaszerleger, mit dem aus dem Kryo-Einsatz eine wasserstoffreiche, kohlenmonoxidfreie erste Gasfraktion sowie eine wasserstoffreiche und kohlenstoffarme zweite Gasfraktion gebildet werden können, wobei die erste Gasfraktion als Make-up-Gas weitergeführt oder mit Stickstoff zum Make-up-Gas ergänzt werden kann, und die zweite Gasfraktion als Brenngas zur Erzeugung von Prozesswärme verwendbar ist.

Vorrichtungsseitig wird die gestellte Aufgabe dadurch gelöst, dass der kryogene Gaszerleger dazu eingerichtet ist, eine wasserstoffreiche und kohlenstoffarme zweite Gasfraktion als Brenngas zu erzeugen, deren Kohlenstoffgehalt geringer als derjenige des Kryo-Einsatzes und höher als derjenige der wasserstoffreichen, kohlenmonoxidfreien ersten Gasfraktion ist.

In einer bevorzugten Ausgestaltung der erfindungsgemäßen Vorrichtung umfasst der kryogene Gaszerleger eine Waschkolonne mit Stoffaustauschelementen, in der zumindest ein Teil des Kryo-Einsatzes zur Abtrennung von Kohlenmonoxid einer Wäsche mit flüssigem Stickstoff unterzogen werden kann, wobei die wasserstoffreiche, kohlenmonoxidfreie erste Gasfraktion vom Kopf der Waschkolonne abziehbar ist. Besonders bevorzugt ist die Waschkolonne mit einem Seitenabzug ausgeführt, über den eine wasserstoffreiche und kohlenstoffarme zweite Gasfraktion als Brenngas abgeführt werden kann. Sinnvollerweise ist der Seitenabzug zwischen dem untersten und dem obersten Stoffaustauschelement der Waschkolonne angeordnet.

In einer weiteren Ausgestaltungen der erfindungsgemäßen Vorrichtung umfasst der kryogene Gaszerleger einen mit der Waschkolonne verbundenen, als Kolonnensumpfabscheider bezeichneten Abscheider, in den zumindest ein Teil des in der Waschkolonne mit abgetrennten Komponenten beladenen Stickstoffs entspannt werden kann, um in eine mit Kohlenstoffverbindungen angereicherte Flüssigphase und eine wasserstoffreiche und kohlenstoffarme Gasphase getrennt zu werden, von der zumindest ein Teil als Brenngas abgezogen werden kann.

In einer anderen Ausgestaltung der erfindungsgemäßen Vorrichtung ist der kryogene Gaszerleger dazu eingerichtet, aus zumindest einem Teil des Kryo-Einsatzes durch Abkühlung ein zweiphasiges Stoffgemisch zu bilden und in einem mit der Waschkolonne verbundenen, als Kolonneneinsatzabscheider bezeichneten Abscheider in eine mit Kohlenstoffverbindungen angereicherte Flüssigphase und eine wasserstoffreiche und kohlenstoffarme Gasphase zu trennen, von der ein erster Teil der Waschkolonne zur Wäsche mit flüssigem Stickstoff zugeführt und ein zweiter Teil als Brenngas abgezogen werden kann.

Vorzugsweise umfasst die Aufbereitungseinrichtung der erfindungsgemäßen Vorrichtung einen adsorptiven Gastrockner, mit dem Wasser aus dem ggf. vorbehandelten Rohwasserstoff abgetrennt werden kann, um einen trockenen Kryo-Einsatz zu erhalten. Zweckmäßigerweise ist der adsorptive Gastrockner so mit dem kryogenen Gaszerleger verbunden, dass ihm ein wasserfrei im kryogenen Gaszerleger erhältliches Gas als Regeneriergas zugeführt werden kann. Vorzugsweise ist die Verbindung so ausgeführt, dass zumindest ein Teil des bei der Stickstoffwäsche anfallenden Sumpfprodukts und/oder zumindest ein Teil der im Kolonnensumpfabscheider und/oder im Kolonneneinsatzabscheider erhältlichen Flüssigphasen nach Anwärmung und Verdampfung gegen abzukühlende Verfahrensströme als Regeneriergas eingesetzt werden können. Da jedes dieser Gase Kohlenstoff enthält, weist die erfindungsgemäße Vorrichtung zweckmäßigerweise eine Verbindung auf, über die zumindest ein Teil eines dieser Gase nach seiner Verwendung als Regeneriergas oder direkt zurückgeführt und in der Reformierung eingesetzt werden kann.

Die Aufbereitungseinrichtung kann weiterhin einen stromaufwärts des Gastrockners angeordneten Methanisierungsreaktor umfassen, mit dem der Rohwasserstoff einer Methanisierung unterzogen werden kann.

Ausgestaltungen der erfindungsgemäßen Vorrichtung sehen weiterhin einen brennerbefeuerten, zur Vorwärmung eines Einsatzstoffs für die Reformierung oder zur Bereitstellung von Wärme für die Reformierungsreaktion oder zur Produktion oder Überhitzung von Prozessdampf ausgelegten Ofen vor, in dem ein erfindungsgemäß erzeugbares Brenngas verbrannt werden kann.

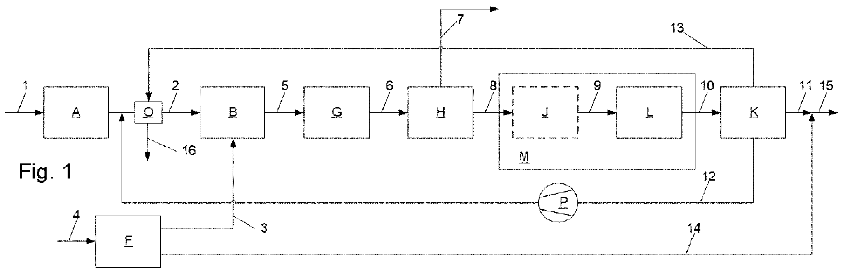

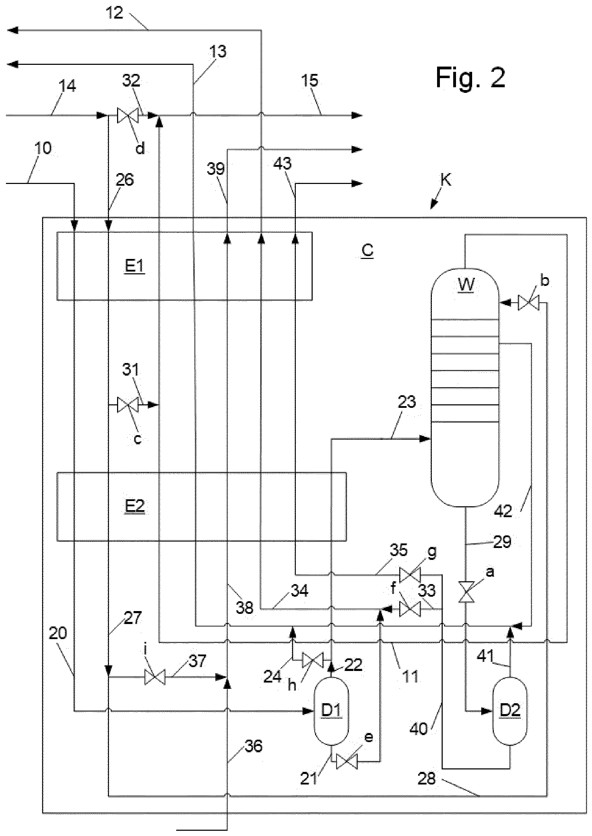

Im Folgenden soll die Erfindung anhand zweier in den **Figuren 1** und **2** schematisch dargestellter Ausführungsbeispiele näher erläutert werden.

Die Figur 1 zeigt eine bevorzugte Variante einer erfindungsgemäßen Einrichtung zur Erzeugung eines Make-up-Gases für eine Ammoniaksynthese.

Die Figur 2 zeigt eine kryogene Gaszerlegung, die besonders vorteilhaft zur erfindungsgemäßen Gewinnung des Make-up-Gases eingesetzt werden kann.

In Figur 1 wird ein kohlenwasserstoffhaltiger Einsatz 1, bei dem es sich etwa um Erdgas handelt, einer Entschwefelungseinrichtung A zugeführt, um einen entschwefelten kohlenwasserstoffhaltigen Einsatz 2 zu erhalten, der in der Reformiereinrichtung B unter Verwendung von Sauerstoff 3, der in einem Luftzerleger F aus Luft 4 gewonnen wird, beispielsweise durch Partielle Oxidation oder Autothermalreformierung zu einem Wasserstoff, Kohlenmonoxid, Kohlendioxid, Methan sowie Argon enthaltenden Syntheserohgas 5 umgesetzt. Zur Erhöhung des Wasserstoffanteils wird das Syntheserohgas 5 einer Wassergas-Konvertierung G unterzogen, bei der Kohlenmonoxid mit Wasser zu Wasserstoff und Kohlendioxid reagiert und eine kohlenmonoxidarme Gasfraktion 6 entsteht, aus der der überwiegende Teil des Kohlendioxids in einer Sauergaswäsche H entfernt wird. Das entfernte Kohlendioxid 7 wird einer Sequestrierung oder stofflichen Nutzung zugeführt, während die verbleibende, wasserstoffreiche und Kohlenmonoxid umfassende, als Rohwasserstoff bezeichnete Gasfraktion 8 in die Aufbereitungseinrichtung M weitergeleitet wird, wo aus ihr unter Einsatz eines bevorzugt adsorptiven Gastrockners L der wasserstoffreiche, Methan und Argon umfassende Kryo-Einsatz 10 entsteht. Optional kann der Rohwasserstoff 8 in der Aufbereitungseinrichtung M einer Methanisierung J unterzogen werden, bei der Kohlenmonoxid und Kohlendioxid mit Wasserstoff zu Methan umgewandelt werden und ein weitgehend kohlenmonoxid- und kohlendioxidfreies Gasgemisch 9 zur Weiterführung in den Gastrockner L erhalten wird. Im kryogenen Gaszerleger K werden aus dem Kryo-Einsatz 10 zumindest eine wasserstoffreiche, kohlenmonoxidfreie Gasfraktion 11, ein methanreiches, argon- und stickstoffarmes Restgas 12 sowie eine wasserstoffreiche und kohlenstoffarme Gasfraktion 13 gewonnen, deren Kohlenstoffgehalt geringer als derjenige des Kryo-Einsatzes 10 und höher als derjenige der wasserstoffreichen, kohlenmonoxidfreien Gasfraktion 11 ist. Während die wasserstoffreiche, kohlenmonoxidfreie Gasfraktion 11 mit Stickstoff 14 zum Make-up-Gas 15 für eine Ammoniaksynthese (nicht dargestellt) ergänzt und das methanreiche, argon- und stickstoffarme Restgas 12 über den Verdichter P vor die Reformiereinrichtung B zurückgeführt wird, wird die wasserstoffreiche und kohlenstoffarme Gasfraktion 13 einem in der Reformiereinrichtung B zur Anwärmung des kohlenwasserstoffhaltigen Einsatzes 2 eingesetzten Ofen O als Brenngas zugeführt und unter Bildung eines weitgehend kohlendioxidfreien Rauchgases 16 verbrannt.

In dem in einer Cold-Box C angeordneten kryogenen Gaszerleger K der Figur 2 wird der Kryo-Einsatz 10 in den Wärmetauschern E1 und E2 so weit abgekühlt, dass das enthaltene Methan nahezu vollständig auskondensiert. Das bei der Abkühlung gebildete zweiphasige Stoffgemisch 20 wird im Kolonneneinsatzabscheider D1 in eine methanreiche Flüssigphase 21 und eine wasserstoffreiche und kohlenstoffarme Gasphase 22 getrennt, die auch den überwiegenden Teil des im Kryo-Einsatz 10 vorhandenen Argons und Kohlenmonoxids enthält. Der größte Teil der wasserstoffreichen und kohlenstoffarmen Gasphase 22 wird über Leitung 23 in den unteren Bereich der Waschkolonne W eingeleitet.

Über Leitung 26 wird Stickstoff, der mit erhöhtem Druck vom Luftzerleger F gasförmig bezogen wird, in die Cold-Box C eingeleitet, wo durch Abkühlung in den Wärmetauschern E1 und E2 der Flüssigstickstoffstrom 27 entsteht, von dem der größte Teil über das Ventil b als Waschstickstoff 28 auf den Kopf der Waschkolonne W entspannt wird. Die wasserstoffreiche Gasphase 23 wird in der Waschkolonne W nach oben geführt und dabei intensiv mit dem Waschstickstoff 28 in Kontakt gebracht, wobei insbesondere enthaltenes Kohlenmonoxid sowie Methanreste und ein Großteil des im Kryo-Einsatz 10 vorliegenden Argons ausgewaschen werden und in die Sumpffraktion gelangen. Der Kopfstrom 11 der Waschkolonne W ist eine wasserstoffreichen und kohlenmonoxidfreie Gasfraktion, die Stickstoff enthält und von Methan und Argon frei ist. Sie erfüllt zwar die an das Make-up-Gas für die Ammoniaksynthese gestellten Reinheitsanforderungen, weist aber einen zu geringen Stickstoffgehalt auf. Dem Kopfstrom 11 wird daher nach einem ersten Anwärmschritt im Wärmetausche E2 über das Ventil c vorgekühlter Stickstoff 31 zugemischt. Nach einem zweiten Anwärmschritt im Wärmetauscher E1 wird über das Ventil d eine weitere Stickstoffmenge 32 zugeführt, um das Make-up-Gas 15 mit dem erforderlichen Wasserstoff/Stickstoff-Verhältnis zu erhalten.

Die Sumpffraktion wird über Leitung 29 aus der Waschkolonne W abgezogen und über das Drosselorgan a in den Kolonnensumpfabscheider D2 entspannt, wo sie in eine weitgehend aus Stickstoff, Kohlenstoffverbindungen und Argon bestehende Flüssigphase 40 und eine wasserstoffreiche und kohlenstoffarme Gasphase 41 getrennt wird. Gemeinsam mit der über einen Seitanabzug aus der Waschkolonne W geführten, durch unvollständige Stickstoffwäsche erhaltenen wasserstoffreichen und kohlenstoffarmen Gasfraktion 42 wird die Gasphase 41 über Leitung 13 weitergeführt und nach Anwärmung gegen abzukühlende Verfahrensströme in den Wärmetauschern E1 und E2 als Brenngas abgegeben. Zusätzlich kann über das Ventil h ein Teil 24 der wasserstoffreichen und kohlenstoffarmen Gasphase 22 aus dem Kolonneneinsatzabscheider D1 geregelt dem Brenngas 13 zugemischt werden.

Die mit dem Druck des Kryo-Einsatzes 10 vorliegende methanreiche Flüssigphase 21 wird aus dem Kolonneneinsatzabscheider D1 über das Ventil e abgezogen und mit einem über das Ventil f zugeführten ersten Teil 33 der im Kolonnensumpfabscheider D2 erhaltenen Flüssigphase 40 zum Stoffstrom 34 vereinigt, der nach Verdampfung und Anwärmung in den Wärmetauschern E2 und E1 das methanreiche und stickstoffarme Restgas 12 bildet, das vor die Reformierung R zurückgeführt wird. Um eine Argon-Anreicherung im Reformerkreislauf zu verhindern, wird ein zweiter Teil 35 der Flüssigphase 40 über das Ventil g abgezogen und nach Verdampfung und Anwärmung in den Wärmetauschern E2 und E1 als Purgegas 43 aus dem Prozess ausgeschleust.

Zum Ausgleich von Kälteverlusten und zur Bilanzierung des Kältehaushalts wird Flüssigstickstoff 36 in die Cold-Box C eingeleitet und durch einen über das Ventil i zugeführten Teil 37 des verflüssigten Stickstoffs 27 zum Stickstoffstrom 38 ergänzt, der nach Verdampfung und Anwärmung in den Wärmetauschern E2 und E1 über Leitung 39 entsorgt oder einer weiteren Nutzung zugeführt wird.

## Patentansprüche

1. Verfahren zur Erzeugung eines kohlenmonoxidfreien, weitgehend aus Wasserstoff und Stickstoff bestehenden Make-up-Gases (15) für eine Ammoniaksynthese, wobei ein kohlenwasserstoffhaltiger Einsatz (1) durch Reformierung (B) und Wassergas-Shift (G) zu einem weitgehend aus Wasserstoff und Kohlendioxid bestehenden, Kohlenmonoxid enthaltenden Synthesegas (6) umgesetzt wird, aus dem durch Abtrennung von Kohlendioxid (7) Rohwasserstoff (8) entsteht, von dem zumindest ein Teil zu einem Einsatz (Kryo-Einsatz) (10) für eine kryogene Gaszerlegung (K) aufbereitet wird, bei der aus dem Kryo-Einsatz (10) eine wasserstoffreiche, kohlenmonoxidfreie erste Gasfraktion (11), die als Make-up-Gas weitergeführt oder mit Stickstoff (14) zum Make-up-Gas (15) ergänzt wird, sowie eine wasserstoffreiche und kohlenstoffarme, als Brenngas (13) zur Erzeugung von Prozesswärme verwendete zweite Gasfraktion entstehen, **dadurch gekennzeichnet, dass** die wasserstoffreiche und kohlenstoffarme zweite Gasfraktion (13) bei der kryogenen Gaszerlegung (K) mit einem Kohlenstoffgehalt gewonnen wird, der geringer als derjenige des Kryo-Einsatzes (10) und höher als derjenige der wasserstoffreichen, kohlenmonoxidfreien ersten Gasfraktion (11) ist.

2. Verfahren nach Anspruch 1, **dadurch gekennzeichnet, dass** bei der kryogenen Gaszerlegung (K) zumindest ein Teil (23) des Kryo-Einsatzes (10) zur Abtrennung von Kohlenstoffverbindungen in einer Waschkolonne (W) mit flüssigem Stickstoff (28) gewaschen wird, wobei die wasserstoffreiche, kohlenmonoxidfreie Gasfraktion (30) vom Kopf und eine wasserstoffreiche und kohlenstoffarme Gasfraktion (42) als Brenngas (13) über einen Seitenabzug aus der Waschkolonne (W) abgezogen werden.

3. Verfahren nach Anspruch 2, **dadurch gekennzeichnet, dass** eine in der Waschkolonne (W) erhältliche, stickstoffreiche und Kohlenstoffverbindungen enthaltende Sumpffraktion (29) in eine stickstoffreiche, mit Kohlenstoffverbindungen angereicherte Flüssigphase (40) und eine wasserstoffreiche und kohlenstoffarme Gasphase (41) getrennt wird, von der zumindest ein Teil als Brenngas (13) abgezogen wird.

4. Verfahren nach einem Ansprüche 2 oder 3, **dadurch gekennzeichnet, dass** bei der kryogenen Gaszerlegung (K) aus zumindest einem Teil des Kryo-Einsatzes (10) durch Abkühlung ein zweiphasiges Stoffgemisch (20) gebildet wird, das in eine mit Kohlenstoffverbindungen angereicherte Flüssigphase (21) und eine wasserstoffreiche und kohlenstoffarme Gasphase (22) getrennt wird, von der ein erster Teil (23) der Wäsche mit flüssigem Stickstoff (28) unterzogen wird, während ein zweiter Teil (24) als Brenngas (13) abgezogen wird.

5. Verfahren nach einem der Ansprüche 1 bis 4, **dadurch gekennzeichnet, dass** der Rohwasserstoff (8) zur Bildung des Kryo-Einsatzes (10) einer Methanisierung (J) unterzogen wird, um Kohlenmonoxid und Kohlendioxid mit Wasserstoff in Methan und Wasser umzuwandeln.

6. Verfahren nach einem der Ansprüche 1 bis 5, **dadurch gekennzeichnet, dass** zumindest eine bei der kryogenen Gaszerlegung (K) anfallende methanreiche Flüssigphase (34) nach Verdampfung und Anwärmung ganz oder teilweise der Reformiereinrichtung (B) als Einsatz zugeführt wird.

7. Verfahren nach einem der Ansprüche 1 bis 6, **dadurch gekennzeichnet, dass** das bei der kryogenen Gaszerlegung (K) erhaltene Brenngas (13) zur Anwärmung eines für die Reformierung (B) bestimmten Einsatzstoffs (2) verbrannt wird.

8. Vorrichtung zur Erzeugung eines kohlenmonoxidfreien, weitgehend aus Wasserstoff und Stickstoff besehenden Make-up-Gases (15) für eine Ammoniaksynthese, mit einer Reformiereinrichtung (B), in der ein kohlenwasserstoffhaltiger Einsatz (1) umgesetzt werden kann, um ein Wasserstoff, Kohlenmonoxid und Kohlendioxid enthaltendes Syntheserohgas (5) zu erhalten, einer Wassergas-Shift (G) und einer Kohlendioxidabtrennung (H), mit deren Hilfe aus dem Syntheserohgas (5) eine wasserstoffreiche, Kohlenmonoxidreste umfassende, als Rohwasserstoff (8) bezeichnete Fraktion erzeugt werden kann, einer Aufbereitungseinrichtung (M), mit der zumindest ein Teil des Rohwasserstoffs (8) zu einem wasserstoffreichen, Kohlenstoffverbindungen aufweisenden Einsatzgas (Kryo-Einsatz) (10) für einen kryogenen Gaszerleger (K) aufbereitet werden kann, sowie einem kryogenen Gaszerleger (K), mit dem aus dem Kryo-Einsatz (10) eine wasserstoffreiche, kohlenmonoxidfreie erste Gasfraktion (11) sowie eine wasserstoffreiche und kohlenstoffarme zweite Gasfraktion (13) gebildet werden können, wobei die erste Gasfraktion (11) als Make-up-Gas weitergeführt oder mit Stickstoff (14) zum Make-up-Gas (15) ergänzt werden kann, und die zweite Gasfraktion (13) als Brenngas zur Erzeugung von Prozesswärme verwendbar ist, **dadurch gekennzeichnet, dass** der kryogene Gaszerleger (K) dazu eingerichtet ist, eine wasserstoffreiche und kohlenstoffarme zweite Gasfraktion (13) als Brenngas zu erzeugen, deren Kohlenstoffgehalt geringer als derjenige des Kryo-Einsatzes (10) und höher als derjenige der wasserstoffreichen, kohlenmonoxidfreien ersten Gasfraktion (11) ist.

9. Vorrichtung nach Anspruch 8, **dadurch gekennzeichnet, dass** der kryogene Gaszerleger (K) eine Waschkolonne umfasst, in der zumindest ein Teil (23) des Kryo-Einsatzes (10) zur Abtrennung von Kohlenstoffverbindungen einer Wäsche mit flüssigem Stickstoff (28) unterzogen werden kann, wobei die wasserstoffreiche, kohlenmonoxidfreie erste Gasfraktion (30) vom Kopf und eine wasserstoffreiche und kohlenstoffarme zweite Gasfraktion (42) als Brenngas (13) über einen Seitenabzug aus der Waschkolonne (W) abgezogen werden können.

10. Vorrichtung nach Anspruch 9, **dadurch gekennzeichnet, dass** der kryogene Gaszerleger (K) einen mit der Waschkolonne (W) verbundenen, als Kolonnensumpfabscheider bezeichneten Abscheider (D2) umfasst, in den zumindest ein Teil des in der Waschkolonne (W) mit abgetrennten Komponenten beladenen Stickstoffs (29) entspannt werden kann, um in eine mit Kohlenstoffverbindungen angereicherte Flüssigphase (40) und eine wasserstoffreiche und kohlenstoffarme Gasphase (41) getrennt zu werden, von der zumindest ein Teil als Brenngas (13) abgezogen werden kann.

11. Vorrichtung nach einem der Ansprüche 9 oder 10, **dadurch gekennzeichnet, dass** aus zumindest einem Teil des Kryo-Einsatzes (10) im kryogene Gaszerleger (K) durch Abkühlung ein zweiphasiges Stoffgemisch (20) gebildet werden kann, das in einem als Kolonneneinsatzabscheider bezeichneten, im kryogenen Gaszerleger (K) angeordneten Abscheider (20) in eine mit Kohlenstoffverbindungen angereicherte Flüssigphase (21) und eine wasserstoffreiche und kohlenstoffarme Gasphase (22) trennbar ist, von der ein erster Teil (23) der Waschkolonne (W) zur Wäsche mit flüssigem Stickstoff (28) zugeführt und ein zweiter Teil (24) als Brenngas (13) abgezogen werden kann.

12. Vorrichtung nach einem der Ansprüche 8 bis 11, **dadurch gekennzeichnet, dass** die Aufbereitungseinrichtung (M) einen Methanisierungsreaktor (J) umfasst, mit dem im Rohwasserstoff (8) vorliegendes Kohlendioxid und Kohlenmonoxid mit Wasserstoff in Methan und Wasser umgewandelt werden kann.

13. Vorrichtung nach einem der Ansprüche 8 bis 12, **dadurch gekennzeichnet, dass** der kryogene Gaszerleger (K) so mit der Reformiereinrichtung (B) verbunden ist, dass eine im kryogenen Gaszerleger (K) anfallende Kohlenstoffverbindungen umfassende Flüssigphase (21, 40) nach Verdampfung und Anwärmung ganz oder teilweise der Reformiereinrichtung (B) als Einsatz zugeführt werden kann.

14. Vorrichtung nach einem der Ansprüche 8 bis 13, **dadurch gekennzeichnet, dass** sie einen Ofen (O) umfasst, in dem ein im kryogenen Gaszerleger (K) erhältliches Brenngas (13) zur Anwärmung eines der Reformiereinrichtung (B) zuführbaren Einsatzstoffs (2) verbrannt werden kann.
